Europäisches Patentamt

European Patent Office

Office européen des brevets

(19)

(11) Publication number: **0 042 699**

**A1**

# (12) EUROPEAN PATENT APPLICATION

(21) Application number: **81302592.1**

(22) Date of filing: **11.06.81**

(51) Int. Cl.³: **H 04 M 11/02**

(30) Priority: **17.06.80 GB 8019759**

(43) Date of publication of application:
**30.12.81 Bulletin 81/52**

(84) Designated Contracting States:
**AT BE CH DE FR GB IT LI LU NL SE**

(71) Applicant: **Geary, Arthur George**
**Ella House Northacre Caston**
**Attleborough Norfolk(GB)**

(72) Inventor: **Geary, Arthur George**
**Ella House Northacre Caston**
**Attleborough Norfolk(GB)**

(74) Representative: **Nash, Keith W.**
**KEITH W. NASH & Co. 22 Hills Road**
**Cambridge CB2 1JP(GB)**

(54) **Improvements in recording and playback apparatus.**

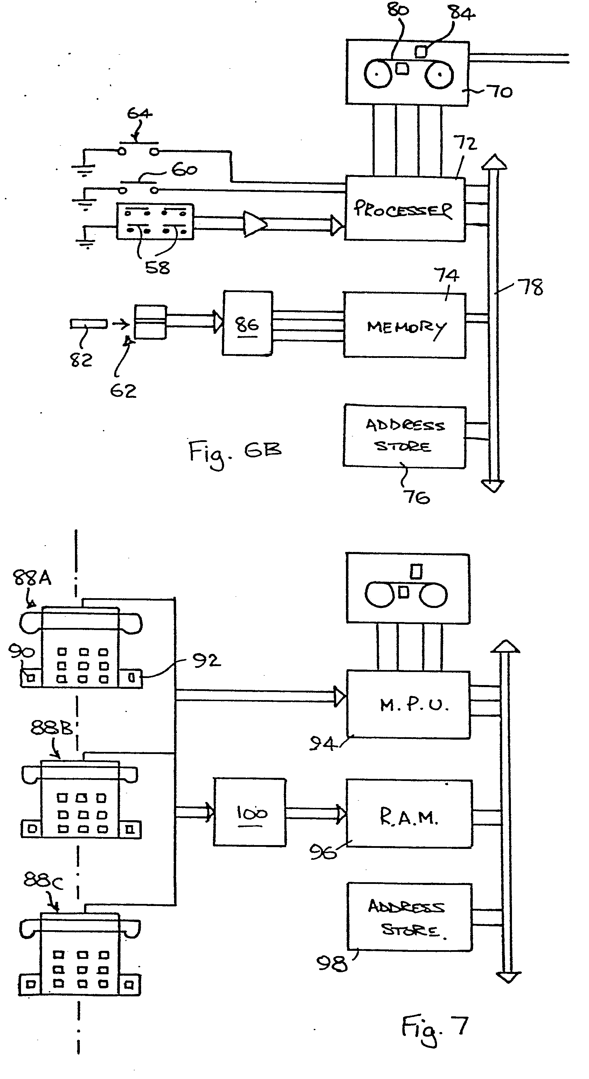

(57) The invention provides a basic door message recorder in the form of a microphone (14) and switch (18) fixed adjacent the door of a building to be accessible from outside the door, together with a tape recording device (20) which is rendered operable by operation of the switch to enable a caller to record a message on the tape. Modifications provide for messages from an occupant to be played back to a caller and for the recording of messages selectively for the occupants of a multiple occupation building. A practical arrangement (Figure 6) for the latter purpose employs a processor (72), memory (74) and address register (76) in conjunction with a tape recording device (70), which processing system is used to enable a message recorded for a particular occupant to be distinguished from messages recorded for other occupants. In a modification (Figure 7) of the last mentioned arrangement, the processor (94, 96, 98) is incorporated in an internal telephones system to provide a message recording facility therein.

Fig. 6B

-1-

Title:   Improvements in Recording and Playback
          Apparatus

## Field of the invention

This invention relates generally to the field of recording and playback apparatus, and more particularly to tape recording devices to be used for storing messages to be played back subsequent to recordal.

## Background to the invention

In some domestic premises, particularly blocks of flats and apartments and the like, it is known to provide facility for a caller to identify himself to the occupant, for example by means of an internal communications system involving a microphone adjacent the door, before the door is released for access. Analogous internal communications systems are generally known for domestic, commercial and other buildings to enable one occupant to communicate with another. Generally, however, as in the case of the door identification apparatus, it is a problem that no message can be transmitted if the occupant or communicatee is out. It is an object of the present invention to provide apparatus which enables this problem to be minimised or overcome.

-2-

## The invention

According to one aspect of the present invention, there is provided in a building a door message recorder which comprises a switch mounted on a door or part of the building adjacent thereto, a microphone mounted adjacent the switch, both said switch and said microphone being accessible to a caller outside the closed door, and a tape recording device which is rendered operable by operation of the switch to allow said caller to speak into the microphone to record a message on the recording tape.

There exist various possibilities for the arrangement and construction of the recorder. Thus, in one arrangement, the recording device is one with an integral microphone, mounted to the rear of the door with the microphone accessible to the front through an aperture in the door. In another arrangement, the recording device is located remote from the door. In the latter case, the microphone preferably forms an integral structure with the switch, said switched microphone structure being mounted on the door or building structure adjacent thereto.

It is also possible to incorporate means enabling the caller to listen to a message left for him by the

-3-

occupant. This may simply be a duplicate recording device, switch and microphone acting as a loudspeaker. Alternatively, however, a three position switch may be employed, which in its third position enables the caller to listen to a recorded message. A common microphone may also be employed for recording and for listening, and by incorporating suitable simple control circuitry, it is also possible to allot one part of the recording device to recording and another part to playback.

Furthermore, for a multiple occupation building, the recorder may comprise one or more recording devices accessible from a microphone associated with a multiple switching unit. A complete arrangement of recording device, switch and microphone can be employed for each division of the building, but less cumbersome and less expensive arrangements are possible. For example, the or each recording device may have a plurality of recording heads for differing recording tracks, each recording head being associated with one position of said multiple switching unit.

However, in a preferred arrangement for a multiple occupation building, the recorder includes an electronic memory associated with a single tape recording device and having a memory location for each division of the multiple occupation building, and a processor for entering into the memory at the appropriate location information indicative of the position in the recording device of a message recorded for any given operative position of the multiple switching unit. The memory, such as a random access memory, may be fed with a signal derived from a tape position indicator which counts the incremental steps of advance of the tape from its starting position. Subsequently, during playback, this information stored in the memory is used to rewind the tape to the starting point of the recorded message. Possibly more conveniently, however, the processor may also be operative to supply a recognition signal which is recorded on the tape, at the start of the recorded message, to indicate the same given operative position of the multiple switching unit. Thus, in both cases, there will be provided a playback switch which, when operated in conjunction with the multiple switching unit, causes the processor to address the memory at the appropriate memory location to cause the recorder to play back any message which has been recorded for any given operative position of the multiple switching unit. In the latter case, prior to playback, the tape of the recorder device is scanned under fast wind or rewind for a recognition

signal corresponding to the information entered into a particular memory location.

Conveniently, the multiple switching unit may comprise a panel switch array and an associated display for indicating that a particular switch has been operated corresponding to a particular division of the building. This assists against accidental mistaken calls, both as regards recording and playback. Sometimes, however, security against deliberate mis-use may be desirable. For this purpose, the playback switch may comprise a keyway slot and a key to be entered in said slot. Thus only the holder of a key fitting the keyway slot will be able to listen to recorded messages. If still greater security is required, so that an authorised person can only listen to any messages specifically intended for him, the keyway slot and key may constitute an electronic switch which, by means of an associated decoder, automatically initiate playback for a particular memory location corresponding to a particular format of the inserted key. The key may, for example, comprise a plastics card having a format of conductive coatings thereon which selectively cooperate with a format of coatings within the keyway slot to define a particular code which identifies a particular memory location and which, by means of the decoder, automatically initiates the appropriate playback.

An erasure button may be provided to erase a message after it has been listened to.

In its simplest form, as a message recorder or message player for a single household or the like, a very simple and inexpensive construction is possible.

Thus, according to another aspect of the present invention, there is provided a message recorder or playback unit which comprises a casing housing a battery powered tape recorder, an insulating card having conductive coatings on its opposite faces, said conductive coatings being electrically isolated from one another so that, with the card interposed between the battery terminals and the recorder power input terminals, said recorder is in an off condition, an on/off switch on the casing which is operable from the outside of the latter, said switch having conductive leads connected to the respective coatings, whereby operation of said switch can put the recorder in an on condition, and a microphone on the casing which can be addressed or listened to from outside the latter and which is connected to the sound input or output terminals of the recorder.

In this simple construction, the tape recorder may be a conventional off-the-shelf cassette recorder left for recording purposes with its integral on/off switch in the on condition. The invention is especially concerned with such a unit when mounted to a door in a building or on a part of the building structure adjacent thereto.

Equally, in its more complex form, the invention extends to a message recorder and playback system which may be employed as part of an internal communications system within a building such as a block of offices, a hospital or a factory or the like.

Thus, according to still another aspect of the invention, there is provided a message playback and recording system which comprises a plurality of access points each having an individual code, a memory means including a speech store and means for reproducing speech which has been stored, an address store and a micro-processor unit, the arrangement being such that a caller at one access point can call up the microprocessor unit by use of a designated "record" code, whereupon, having entered the code of any other access point, the call is fed to the speech store to enable the caller to record a message associated with a memory location corresponding to the code of the called up access point, which memory location is accessed through the address store; and at a subsequent time a user can call up the microprocessor unit by use of a designated "play-back" code whereupon, having entered the appropriate individual code, the user can gain access to the speech store through the address store to enable said user to listen to the message stored at the location associated with said appropriate individual code.

In this proposal, the access points will usually be readily available in the form of internal telephones or telephone points, linked to a central switchboard, manned or unmanned, to which the system of the invention may readily be connected.

Preferably, the arrangement will be such that the caller at one access point can call up any other access point and, if no reply is received, is automatically transferred to the microprocessor unit under the designated "record" code. As previously indicated in connection with the first aspect of the invention, security requirements may make it desirable that the appropriate individual code is entered or accepted only when the user inserts a key into an electronic key-lock, each possible user having a different individual code corresponding to a different key format.

In one practical arrangement, the memory means comprises an electronic memory and a tape recorder operative under the control of the microprocessor unit so that, when a message is recorded, information is entered into the memory at the appropriate location therein corresponding to the code of the called up access point, thereby to enable a recorded message under said code to be isolated from any other messages recorded under the codes of different access points. Preferably, at the start of a recorded message, a recognition signal is recorded on the tape corresponding to the code of the called up access point. Subsequently, under the control of the microprocessor unit, the entry of the appropriate individual code for playback initiates a scanning of the tape during fast wind or rewind to identify the recognition signal by correspondence with the information entered into the memory at the corresponding memory location. Preferably, both a starting recognition signal and a message concluded signal are recorded on the tape. The scanning head, on reaching the message concluded signal on the tape, will cease playback. Automatic erasure may then be effected, or an erasure signal may be entered from the access point in use. The memory is preferably a random access memory to equalise times of access to differing memory locations.

<u>In the accompanying drawings</u>:

Figures 1A and 1B respectively show a door to a single household building fitted with the visible parts of a message recorder and show the circuit associated therewith;

Figures 2A and 2B similarly show a modified arrangement for a multiple occupation building;

Figure 3 shows a modification of the arrangement of Figure 1B;

Figure 4 shows an alternative modification;

Figures 5A and 5B show the construction of a basic door message recording unit;

Figures 6A and 6B show a more complex door message recording system for a multiple occupation building, Figure 6A showing the door panel and Figure 6B the associated circuitry; and

Figure 7 shows a possible circuit arrangement for an internal message recording and playback system within a building.

<u>Description of embodiments</u>

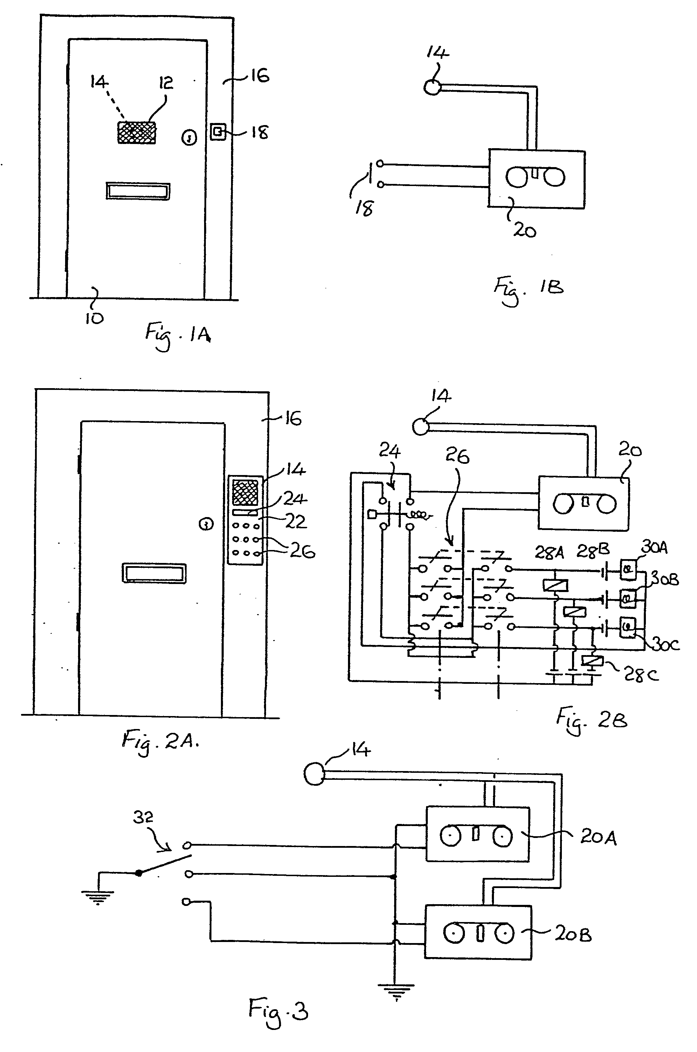

In Figure 1A is shown a door 10 to a single household building, having built into such door a grille 12 affording speaking access to a microphone 14. On the doorframe 16 at the side of the door 10 is fitted a push switch 18. The circuitry is shown in Figure 1B. When the switch 18 is depressed, a cassette tape recorder 20 is switched on and held on with the tape running as long as the switch remains depressed. The microphone 14 is connected to the sound input terminals of the recorder 20.

It will be apparent that the switch 18 could be a detent switch which locks on when once depressed and is released when depressed again. It will also be clear that the microphone 14 could be located on the doorframe and/or the switch 18 located on the door. It is visualised that the recorder 20 may be located remote from the door 10, although this is by no means essential. The recorder 20 preferably has its own play back facility so that any recorded messages from callers, e.g. callers when the house is unoccupied, can be readily listened to. Electrical connections to components on the door 10 can readily be effected through leads entering from the hinged edge of the door.

For a multiple occupation building, it would be possible to provide a complete duplicate system for each flat, apartment or other building division. Preferably, however, at least the microphone or the recorder will be shared. Figures 2A and 2B show an arrangement in which both microphone 14 and cassette tape recorder 20 are shared. The doorframe 16 has a panel 22 incorporating the microphone 14, a "press to record" switch 24 and a battery of switches 26 one for each apartment. As shown in Figure 2B, the switches 26 are connected in parallel array between the press switch 24 and the recorder 20 so that, with the press switch 24 depressed, any one of the switches 26 can be operated to switch on the recorder so that a caller can record a message. In order to indicate to the occupant of a particular apartment that a message has been recorded for him, e.g. in his absence, each switch 26 is a ganged switch which also serves to operate one of a series of trip indicators 28A, 28B, 28C ...., one for each apartment. The individual indicator circuits are prepared by depression of the press switch 24 and cannot be tripped without depression of this switch 24, just as the recorder 20 requires the joint operation of both the switch 24 and one of the switches 26 in order to be switched on. Either the press switch 24, or the switches 26 for the individual apartments, may be detent switches, so that the caller is required to hold only one switch in a depressed condition while recording a

-13-

message.    The detent switch will preferably be the press switch 24, because the switches 26 can also serve as the usual switches which complete door bell circuits to the individual apartments.    As shown in Figure 2B, these individual circuits including bell or buzzer devices 30A, 30B, 30C, ..., are in a prepared condition only when the press switch 24 is in its normal non-depressed state.

Figure 3 shows a modification of the arrangement of Figure 1B, wherein the occupant is enabled to leave a recorded message for a caller.    This modification involves use of two cassette tape recorders 20A, 20B, connected to a common microphone 14 which for one recorder serves as a loudspeaker, the simple push switch 18 of Figures 1A and 1B being replaced by a three position switch 32.

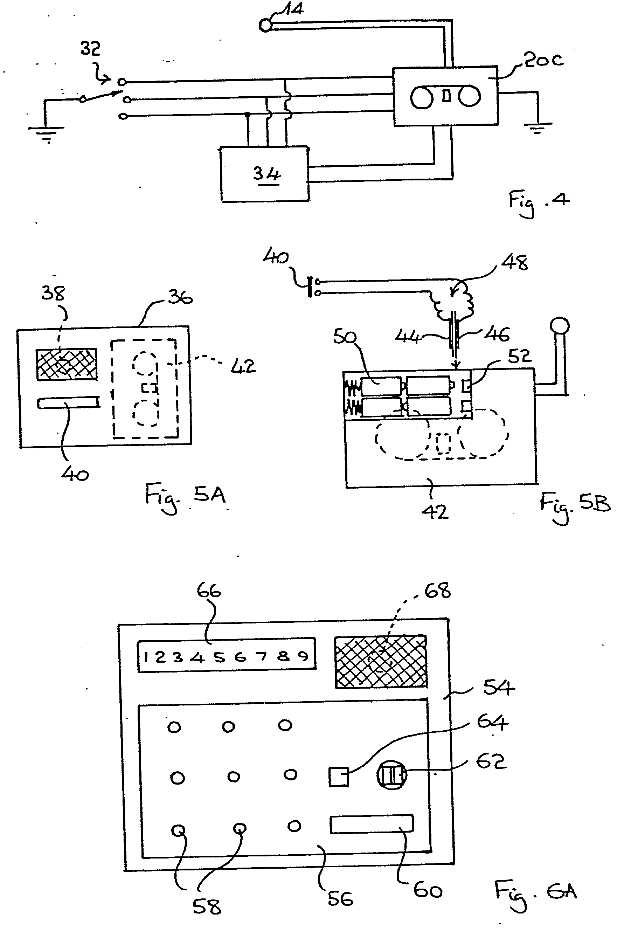

Figure 4 is a development of the modification of Figure 3, wherein a control circuit 34 is introduced to enable a single recorder 20C to serve both to deliver and to record messages.    The tape of the recorder 20C can have two tracks switched by the control circuit 34 according to the position of the position switch 32, the recorder being simultaneously switched by the control circuit 34 between record and playback.    Alternatively, a simple one track tape may be retained, with spaced portions of its length allotted to recording and to playback under the control of the control circuit 34, which in addition to switching between the two functions acts to operate the recorder 200 under fast wind or rewind between the respective spaced portions of tape.

In the context of multiple occupation buildings, having a relatively small number of apartments, it is also possible to use a multiple track recorder switched from track to track according to which apartment is called up. Furthermore, modifications of such an arrangement, and likewise the arrangement of Figure 2B, can enable a caller to listen to a message left for him by a particular occupant of a multiple occupation building, as well as to leave a message in reply for that particular occupant. Generally, however, these basic systems cannot provide either privacy or security against misuse (unauthorised playback). A more complex system which can provide these advantages, if and when required, is described later.

There will first be described an especially convenient and simple message recording and/or playback unit which will be useful to a householder or other person who may not wish to have permanent or semi-permanent

-15-

electrical wiring installed, and may not even wish to leave such a unit permanently in place. This recording and/or playback unit is shown in Figures 5A and 5B.

It comprises a box 36 in which is installed a microphone 38 and a push switch 40, together with a conventional off-the-shelf battery cassette tape recorder 42 which is readily disconnectable from the switch and microphone so as to be removable from the box. The normal on/off switch of the cassette recorder 42 is left on, and the appropriate switch for recording or playback is left operated. However, the cassette recorder 42 is normally rendered non-operational by the push switch 40, which, as shown in Figure 5B, is connected across conductive coatings 44, 46 isolated from one another on opposite faces of an insulating card 48, which may for example be a card of plastics material. The insulating card is inserted between the batteries 50 and the power input terminals 52 of the cassette recorder 42, so that the power from the batteries is only supplied to the recorder, through the coatings 44, 46, when such coatings are bridged by depression of the push switch 40.

The complete message recording box 26 can be hung on the back of a door behind a grilled aperture therein, or possibly fixed to the front of the door or a part of the building adjacent thereto, to enable a caller to record a message in the absence of the occupant or in other cases when no reply to the door bell is received or the caller does not wish to disturb the occupant. It will be equally apparent that the unit 36 can alternatively be used by the occupant to leave messages for expected callers such as delivery men. The complete box can be removed from the door when it is not required for use.

Various modifications apply to the unit described with reference to Figures 5A and 5B, such as use of an integral switch and microphone, or possibly a cassette recorder having a built-in microphone. Like modifications also apply to the arrangements previously described with reference to Figures 1 to 4, and it will be apparent that box units similar to that shown in Figures 5A and 5B may be designed with circuit arrangements generally analogous to the arrangements shown in Figures 2 to 4.

Returning now to the subject of multiple occupation buildings, Figures 6A and 6B show an arrangement which can afford privacy for individual occupants or users and security against misuse.

The door panel 54 (see Figure 6A) or panel located on the building adjacent the door, comprises a keyboard 56 provided with a push button 58 for each apartment, a "press to record" switch 60, a key-receiving playback switch 62, and an erasure switch 64. In addition, the panel 54 has a display 66 to indicate which push button 58 has been depressed, and a microphone 68 behind a grille 69.

The circuitry associated with the panel 54 is shown in Figure 6B, where the above-mentioned components of the panel 54 are designated by the same reference numerals. A tape recording device 70 is operable under the control of a processor 72 associated with a memory 74 and an address register or store 76 through a bus 78.

When the push button 58 for a particular apartment is depressed, the number of the apartment appears on the display 66 to enable it to be checked that the correct button has been operated. Operation of the "press to record" switch 60 then enables a message to be recorded in the tape recording device 70, the operations of which are controlled by the processor 72. More particularly, operation of a push-button 58 causes the processor 72 to switch on the recording device 70, and to enter into the memory 74, which is accessed through the address store 76,

0042699

-18-

information which will enable a message for a particular apartment to be identified.  The memory 74 is preferably a RAM having a particular memory location for each apartment.  A recognition signal is also generated. Operation of the switch 60 then causes the recognition signal appropriate to the designated apartment to be recorded on the tape through the recording head 80, and the tape is set in motion.  A message can then be recorded by a caller.

When an authorised user wishes to listen to messages recorded for him, he presses the appropriate push-button 58 for his apartment, which is checked by the display 66.  The recording device 70 is switched on. Insertion of a key 82 in the key-receiving playback switch 62 causes the processor 72 to initiate a rapid scanning of the tape by a scanning head 84, under fast wind or rewind, in order to identify a recognition signal which corresponds to information extracted from the memory accessed through the address store 76 when the correct key 82, which may be unique to the individual user as described below, has been inserted.  Thus, if the key 82 does not relate to the particular push button 58 which has been depressed, the apparatus may shut down. If an appropriate recognition signal is identified on the tape, playback is initiated. Preferably, an end of message signal will have been recorded on the tape when the switch 60 was released after recording a message, so that this end of message signal can subsequently be sensed by the scanning head 84 to terminate playback at the end of a message. Operation of the erasure switch 64 can then be arranged to clear the tape of the recorded and listened to message, or alternatively the processor can be programmed to erase a message automatically after playback.

The reference 86 designates a decoder which is interposed between the keyway switch 62 and the memory 74 to identify an inserted key and generate a signal which provides access to the appropriate memory location. The keyway switch 62 may comprise a slot having a format of conductors therein for cooperation with any one of a number of unique keys in the form of plastics cards having unique formats of conductors which cooperate with the format of conductors in the keyway switch slot to produce differing coded signals decoded by the decoder to provide differing accessing signals for differing memory locations. Alternatively, the key-receiving switch 62 may be a switch having a sensor therein for generating the differing coded signals when various keys of differing patterns are rotated.

The arrangement above described with reference to Figure 6B may be modified in various ways. For example, keys of unique format with an associated decoder are not essential if privacy is not required. The fact that only authorised users have keys, even identical keys, affords protection against misuse in the form of playback by unauthorised persons. The manner of operation can also be modified, retaining the essential requirement that, when a message is recorded, access is obtained to the memory through the address store to enable information to be entered therein which is related to the position of the recorded message in the speech store. In the above-described arrangement, this relationship is achieved by associating this information with a signal recorded on the tape in juxtaposition to the recorded message. Alternatively, however, the tape may have a position indicating track or may otherwise be marked in a manner which provides a position signal which is entered into the memory when the microprocessor is called up to record a message. It is then possible to dispense with the requirement to scan the tape prior to playback.

The arrangement described with reference to Figure 6B can readily be modified for use as a message recording and playback arrangement forming part of an internal communications system within a building. Thus, in factories, office blocks, hospitals and other large buildings, it is common for various sections of the building to be linked by means of an internal telephones system to which access can be gained at a number of telephone points. Figure 7 shows an adaptation of the arrangement of Figure 6B to an internal telephones system.

In Figure 7, references 88A, 88B, 88C designate telephones at a number of access points, each such telephone being modified to include a "record" switch 90 and a keyway slot "playback" switch 92. From any one access point, the same or any other access point is designated by use of the telephone keyboard (or dial), using the same code as that already designated for the internal telephones system. The microprocessor is referenced 94, the random access memory 96, the address register 98 and the decoder 100. The telephones 88A, 88B, 88C and the associated switches replace the components of Figure 6B carried by the door panel of Figure 6A, and when a message is played back, it is directed by the processor 94 to the calling-up access

0042699

-22-

point 88A, 88B, 88C ..., which may or may not be the same access point as that from which the message was recorded. In other respects, operation of the arrangement of Figure 7 is similar to that described with reference to Figure 6B, and the Figure 7 arrangement can be modified in similar manner to the modifications mentioned in connection with the arrangement of Figure 6B. Finally, it will be appreciated that the arrangement of Figure 6B can be combined with the arrangement of Figure 7 using a common processing system, thereby to incorporate a door message recorder into an internal telephones system.

-23-

Claims

1.      In a building, a door message recorder which comprises a switch (18) mounted on a door (10) or part of the building adjacent thereto, a microphone (14) mounted adjacent the switch (18), both said switch (18) and said microphone (14) being accessible to a caller outside the closed door, and a tape recording device (20) which is rendered operable by operation of the switch (18), to allow said caller to speak into the microphone (14) to record a message on the recording tape.

2.      A recorder according to claim 1, wherein the microphone (14) forms an integral structure with the switch (18), said switched microphone structure being mounted on the door (10) or building structure adjacent thereto.

3.      A recorder according to claim 1 or 2, wherein the switch is a three-position switch (32) which in its third position enables a caller to listen to a message which has been recorded on the same or a different recording device (20A,20B,20C).

4.      A recorder according to claim 1, 2 or 3, for a multiple occupation building including a multiple switching unit (56) and an electronic memory (74) associated with the tape recording device (70), having a memory location for each division of the multiple occupation building, and a processor (72) for entering into the memory (74) at the appropriate location information indicative of the position in the recording device (70) of a message recorded for any given operative position of the multiple switching unit.

5. A recorder according to claim 4, wherein the processor (72) is also operative to supply a recognition signal which is recorded on the tape, at the start of the recorded message, to indicate the same given operative position of the multiple switching unit.

6. A recorder according to claim 4 or 5, including a playback switch (62) which, when operated in conjunction with the multiple switching unit, causes the processor (72) to address the memory (74) at the appropriate memory location to cause the recorder (70) to play back any message which has been recorded for any given operative position of the multiple switching unit.

7. A recorder according to claim 4, 5 or 6, wherein the multiple switching unit comprises a panel switch array (56) and an associated display (66) for indicating that a particular switch has been operated corresponding to a particular division of the building.

8. A message recording or playback unit with comprises a casing (36) housing a battery powered tape recorder (42), an insulating card (48) having conductive coatings (44,46) on its opposite faces, said conductive coatings (44,46) being electrically isolated from one another so that, with the card (48) interposed between the battery (50) terminals and the recorder power input terminals (52), said recorder is in an off condition, an on/off switch (40) on the casing (36) which is operable from the outside of the latter, said switch (40) having conductive leads connected to the respective coatings, whereby operation of said switch (40) can put the recorder (42) in an on condition, and a microphone (38) on the casing (36) which can be addressed or listened to from outside the latter and which is connected to the sound input or output terminals of the recorder (42).

9. A message recording and playback system which comprises a plurality of access points each having an individual code, a memory means (74) including a speech store (70) and means for reproducing speech which has been stored (70), an address store (76) and a micro-processor unit (72), the arrangement being such that a caller at one access point can call up the micro-processor unit (72) by use of a designated "record" code whereupon, having entered the code of any other access point, the call is fed to the speech store (70) to enable the caller to record a message associated with a memory location corresponding to the code of the called up access point, which memory location is accessed through the address store (76); and at a subsequent time a user can call up the microprocessor unit (72) by use of a designated "play back" code whereupon, having entered the appropriate individual code, the user can gain access to the speech store (70) through the address store (76) to enable said user to listen to the message stored at the location associated with said appropriate individual code.

10. A system according to claim 9, wherein the arrangement is such that the caller at one access point can call up any other access point and, if no reply is received, is automatically transferred to the microprocessor unit (72) under the designated "record" code.

1|3        0042699

Fig. 1A

Fig. 1B

Fig. 2A.

Fig. 2B

Fig. 3

Fig. 4

Fig. 5A

Fig. 5B

1 2 3 4 5 6 7 8 9

Fig. 6A

Fig. 6B

Fig. 7

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A - 1 487 831 (FRIEDRICH MERK TELEFONBAU) <br><br> * In its entirety * <br> --- <br><br> CH - A - 586 982 (PADALINO) <br><br> * In its entirety * <br> --- | 1 <br><br><br><br><br> 1 | H 04 M 11/02 |
| A | FR - A - 2 243 566 (GERO) <br><br> * In its entirety * | 1 | |

TECHNICAL FIELDS SEARCHED (Int. Cl.³)

H 04 M 11/02
1/64
1/65

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01.10.1981 | KEPPENS |

EPO Form 1503.1  06.78